# EUROPEAN PATENT APPLICATION

(11) **EP 4 841 309 A1**
(43) Date of publication of application: **18.11.2026**
(21) Application number: 25751410.9
(22) Date of filing: 26.01.2025
(51) Int. Cl.: G01S 19/43

(54) **POSITIONING METHOD, APPARATUS, DEVICE, AND SYSTEM**

(30) Priority: 06.02.2024 CN 202410168182
(71) Applicant: Wuhan Huace Navigation Technology Co., Ltd., Wuhan, Hubei 430223 (CN); Shanghai Huace Navigation Technology Ltd, Shanghai 201702 (CN)
(72) Inventor: YUAN, Jiang, Wuhan, Hubei 430223 (CN); YUAN, Benyin, Wuhan, Hubei 430223 (CN); XUE, Lirong, Wuhan, Hubei 430223 (CN); WANG, Yusheng, Wuhan, Hubei 430223 (CN)
(74) Representative: Murgitroyd & Company
(86) International application number: PCT/CN2025/075288
(87) International publication number: WO 2025/167810

(57) **Abstract**

Disclosed are a positioning method, apparatus, device, and system. The positioning device includes an image collection apparatus (92) and a point cloud collection apparatus (93). The positioning method includes: in response to a measurement start instruction from a user, controlling the image collection apparatus to collect an environment image, and displaying the environment image and an aiming mark on a display apparatus (S201); in response to a positioning instruction from the user, controlling the point cloud collection apparatus to collect an environment point cloud, obtaining a target position in the environment image aimed by the aiming mark, and determining, based on the environment point cloud and the target position, absolute position information of a test point corresponding to the target position (S202). Non-contact high-precision positioning measurement of the test point in an occluded environment can be implemented.

## Description

### CROSS-REFERENCE TO RELATED APPLICATIONS

The present disclosure claims priority to the Chinese patent application No. 2024101681827, filed with the China Patent Office on February 6, 2024, and entitled "POSITIONING METHOD, APPARATUS, DEVICE, AND SYSTEM", the entire content of which is incorporated herein by reference.

### TECHNICAL FIELD

The present disclosure relates to the field of high-precision measurement and positioning, and in particular, to a positioning method, an apparatus, a device, and a system.

### BACKGROUND

The real-time kinematic (RTK) positioning technology requires that, in an open environment, a global navigation satellite system (GNSS) receiver can receive a sufficient number of high-strength satellite signals to implement high-precision positioning.

At present, to implement high-precision positioning in an occluded environment, a transition point needs to be selected in an open environment, absolute position information of the transition point is obtained through RTK measurement, relative position information from the transition point to a measurement point is then determined by means of other measurement devices, and absolute position information of the measurement point is finally determined. This positioning method has the disadvantages of high measurement cost, great measurement difficulty, and low positioning efficiency. When the transition point is selected, a measurement environment needs to be artificially constructed, which wastes manpower and material resources and imposes strict environmental requirements. In addition to an open condition, it is further necessary to ensure that the environment between the transition point and the measurement point is free of occlusion. Moreover, a process of measuring the relative position information from the transition point to the measurement point is complex and difficult, imposes high technical requirements on personnel, and incurs high measurement cost. Furthermore, a process of manually converting the measurement data is relatively complex, resulting in low positioning efficiency, such that the absolute position information of the measurement point cannot be output in real time.

Therefore, how to automatically implement high-precision positioning in an occluded environment and output the absolute position information of the measurement point in real time is a problem to be solved urgently.

### SUMMARY

In view of the deficiencies of the prior art described above, an objective of the present disclosure is to provide a positioning method, an apparatus, a device, and a system to solve the problem that a positioning method for an occluded environment in the prior art has the disadvantages of high measurement cost, great measurement difficulty, and low positioning efficiency.

To achieve the above objective, technical solutions disclosed in the embodiments of the present disclosure are as follows.

In a first aspect, a positioning method is provided in an embodiment of the present disclosure. The positioning method is applied to a positioning device, the positioning device includes an image collection apparatus and a point cloud collection apparatus, and the positioning method includes:
in response to a measurement start instruction from a user, controlling the image collection apparatus to collect an environment image, and displaying the environment image and an aiming mark on a display apparatus; and
in response to a positioning instruction from the user, controlling the point cloud collection apparatus to collect an environment point cloud, obtaining a target position in the environment image aimed by the aiming mark, and determining, based on the environment point cloud and the target position, absolute position information of a test point corresponding to the target position.

As an optional implementation, obtaining the target position in the environment image aimed by the aiming mark includes:
obtaining a plurality of candidate positions aimed by the aiming mark within a preset position error range during a preset duration, where a center of the preset position error range is a position aimed by the aiming mark at a start moment of the preset duration; and
obtaining the target position based on the plurality of candidate positions.

As an optional implementation, obtaining the target position based on the plurality of candidate positions includes:
determining an average value of the plurality of candidate positions, and taking the average value as the target position.

As an optional implementation, the aiming mark is displayed at a center of a screen of the display apparatus, and the position aimed by the aiming mark is a center of an image collected by the image collection apparatus.

As an optional implementation, determining, based on the environment point cloud and the target position, the absolute position information of the test point corresponding to the target position includes:
determining, based on the environment point cloud and the target position, relative coordinates of the test point in a relative coordinate system, where an origin of the relative coordinate system is a preset point of the positioning device; and
determining the absolute position information of the test point based on the relative coordinates of the test point in the relative coordinate system and absolute coordinates of the preset point.

As an optional implementation, a display position of the aiming mark in the display apparatus is indicated by the user.

As an optional implementation, determining, based on the environment point cloud and the target position, the absolute position information of the test point corresponding to the target position includes:
determining, based on the environment point cloud and an image center position of the image collection apparatus, relative coordinates of the image center position in the relative coordinate system, where the origin of the relative coordinate system is the preset point of the positioning device;
determining the relative coordinates of the test point in the relative coordinate system based on a positional relationship between the target position and the center of the screen of the display apparatus and the relative coordinates of the image center position in the relative coordinate system; and
determining the absolute position information of the test point based on the relative coordinates of the test point in the relative coordinate system and the absolute coordinates of the preset point.

As an optional implementation, the positioning device is a real-time differential positioning device with a centering pole.

As an optional implementation, the measurement start instruction is input by the user through the display apparatus.

As an optional implementation, the positioning instruction is input by the user through the display apparatus.

As an optional implementation, after determining, based on the environment point cloud and the target position, the absolute position information of the test point corresponding to the target position, the positioning method further includes:
outputting the absolute position information.

As an optional implementation, outputting the absolute position information includes:
displaying the absolute position information of the test point on the display apparatus.

In a second aspect, a positioning apparatus is provided in an embodiment of the present disclosure. The positioning apparatus includes:
a display module, configured to, in response to a measurement start instruction from a user, control an image collection apparatus to collect an environment image, and display the environment image and an aiming mark on a display apparatus; and
a determination module, configured to, in response to a positioning instruction from the user, control a point cloud collection apparatus to collect an environment point cloud, obtain a target position in the environment image aimed by the aiming mark, and determine, based on the environment point cloud and the target position, absolute position information of a test point corresponding to the target position.

As an optional implementation, the determination module is specifically configured to:
obtain a plurality of candidate positions aimed by the aiming mark within a preset position error range during a preset duration, where a center of the preset position error range is a position aimed by the aiming mark at a start moment of the preset duration; and
obtain the target position based on the plurality of candidate positions.

As an optional implementation, the determination module is specifically configured to:
determine an average value of the plurality of candidate positions, and take the average value as the target position.

As an optional implementation, the aiming mark is displayed at a center of a screen of the display apparatus, and the position aimed by the aiming mark is a center of an image collected by the image collection apparatus.

As an optional implementation, the determination module is specifically configured to:
determine, based on the environment point cloud and the target position, relative coordinates of the test point in a relative coordinate system, where an origin of the relative coordinate system is a preset point of the positioning device; and
determine the absolute position information of the test point based on the relative coordinates of the test point in the relative coordinate system and absolute coordinates of the preset point.

As an optional implementation, a display position of the aiming mark in the display apparatus is indicated by the user.

As an optional implementation, the determination module is specifically configured to:
determine, based on the environment point cloud and an image center position of the image collection apparatus, relative coordinates of the image center position in the relative coordinate system, where the origin of the relative coordinate system is the preset point of the positioning device;
determine the relative coordinates of the test point in the relative coordinate system based on a positional relationship between the target position and the center of the screen of the display apparatus and the relative coordinates of the image center position in the relative coordinate system; and
determine the absolute position information of the test point based on the relative coordinates of the test point in the relative coordinate system and the absolute coordinates of the preset point.

As an optional implementation, the positioning device is a real-time differential positioning device with a centering pole.

As an optional implementation, the measurement start instruction is input by the user through the display apparatus.

As an optional implementation, the positioning instruction is input by the user through the display apparatus.

As an optional implementation, the positioning apparatus further includes an output module, configured to output the absolute position information.

As an optional implementation, the output module is specifically configured to:
display the absolute position information of the test point on the display apparatus.

In a third aspect, an embodiment of the present disclosure provides a positioning device, including an image collection apparatus, a point cloud collection apparatus, a processor, a memory, and a bus. The image collection apparatus and the point cloud collection apparatus are each communicatively connected to the processor. The memory stores machine-readable instructions executable by the processor. When the positioning device operates, the processor executes the machine-readable instructions to perform the steps of the positioning method according to the first aspect.

In a fourth aspect, an embodiment of the present disclosure provides a positioning system, including the positioning device according to the first aspect and a display apparatus communicatively connected to the positioning device.

The beneficial effects of the present disclosure are as follows.

The present disclosure provides a positioning method, an apparatus, a device, and a system. A positioning device responds to a measurement start instruction from a user, controls, according to the measurement start instruction, an image collection apparatus to collect an environment image in real time, and sends the environment image to a display apparatus in real time. An image of a surrounding environment of the positioning device collected by the image collection apparatus is displayed on the display apparatus in real time, and an aiming mark of the image collection apparatus is present in the image displayed by the display apparatus. The positioning device further responds to a positioning instruction from the user, controls, according to the positioning instruction, a point cloud collection apparatus to collect an environment point cloud in real time, and obtains, according to the positioning instruction, a target position in the environment image aimed by the aiming mark. Absolute position information of a test point corresponding to the target position is determined based on the environment point cloud collected by the point cloud collection apparatus, the target position, and absolute coordinates of an RTK antenna center. As such, non-contact high-precision positioning measurement in an occluded environment is implemented, and positioning efficiency and positioning accuracy are improved.

### BRIEF DESCRIPTION OF DRAWINGS

To describe the technical solutions of the embodiments of the present disclosure clearer, the accompanying drawings required in the embodiments are briefly introduced below. It should be understood that the following accompanying drawings only show some embodiments of the present disclosure and therefore should not be regarded as limiting the scope. Those of ordinary skill in the art may further obtain other related accompanying drawings based on these accompanying drawings without inventive effort.
FIG. 1 is a schematic structural diagram of a positioning system provided in an embodiment of the present disclosure.
FIG. 2 is a schematic flowchart of a positioning method provided in an embodiment of the present disclosure.
FIG. 3 is a schematic flowchart of obtaining a target position in the positioning method provided in an embodiment of the present disclosure.
FIG. 4 is a schematic flowchart of determining absolute position information of a test point in the positioning method provided in an embodiment of the present disclosure.
FIG. 5 is a schematic diagram of determining a test point by a point cloud collection apparatus and an image collection apparatus in a positioning device.
FIG. 6 is another schematic diagram of determining absolute position information of a test point in the positioning method provided in an embodiment of the present disclosure.
FIG. 7 is a module structure diagram of a positioning apparatus provided in an embodiment of the present disclosure.
FIG. 8 is another module structure diagram of the positioning apparatus provided in an embodiment of the present disclosure.
FIG. 9 is a schematic structural diagram of a positioning device provided in an embodiment of the present disclosure.

### DETAILED DESCRIPTION

To make the objectives, technical solutions, and advantages of the embodiments of the present disclosure clearer, the technical solutions of the embodiments of the present disclosure are clearly and completely described below with reference to the accompanying drawings of the embodiments of the present disclosure. It should be understood that the accompanying drawings of the present disclosure only serve the purpose of illustration and description, and are not used to limit the protection scope of the present disclosure. In addition, it should be understood that the schematic accompanying drawings are not drawn to scale. The flowcharts used in the present disclosure show operations implemented according to some embodiments of the present disclosure. It should be understood that the operations of the flowcharts may be implemented out of order, and steps having no logical contextual relationship may be reversed in order or implemented simultaneously. In addition, those skilled in the art may, under the guidance of the content of the present disclosure, add one or more other operations to the flowcharts, or remove one or more operations from the flowcharts.

In addition, the described embodiments are only some embodiments of the present disclosure, rather than all of the embodiments. The components of the embodiments of the present disclosure generally described and shown in the accompanying drawings herein may be arranged and designed in various different configurations. Therefore, the following detailed description of the embodiments of the present disclosure provided in the accompanying drawings is not intended to limit the scope of the present disclosure claimed, but merely represents selected embodiments of the present disclosure. All other embodiments obtained by those skilled in the art based on the embodiments of the present disclosure without inventive effort fall within the protection scope of the present disclosure.

It should be noted that the term "include" will be used in the embodiments of the present disclosure to indicate the presence of the features stated thereafter, but does not exclude the addition of other features.

At present, positioning methods for an occluded environment have the disadvantages of high measurement cost, great measurement difficulty, and low positioning efficiency, and cannot output absolute position information of a measurement point in real time.

Based on the above problems, a positioning method, an apparatus, a device, and a system are provided in embodiments of the present disclosure. An image collection apparatus and a point cloud collection apparatus are integrated in a positioning device. A user controls, by inputting a measurement start instruction and a positioning instruction, the image collection apparatus and the point cloud collection apparatus in the positioning device to collect an environment image and an environment point cloud, respectively, and aims a test point corresponding to a target position on a display device. Absolute position information of the test point corresponding to the target position is obtained through the collected environment image and environment point cloud, so that non-contact accurate positioning measurement of the test point in an occluded environment is implemented.

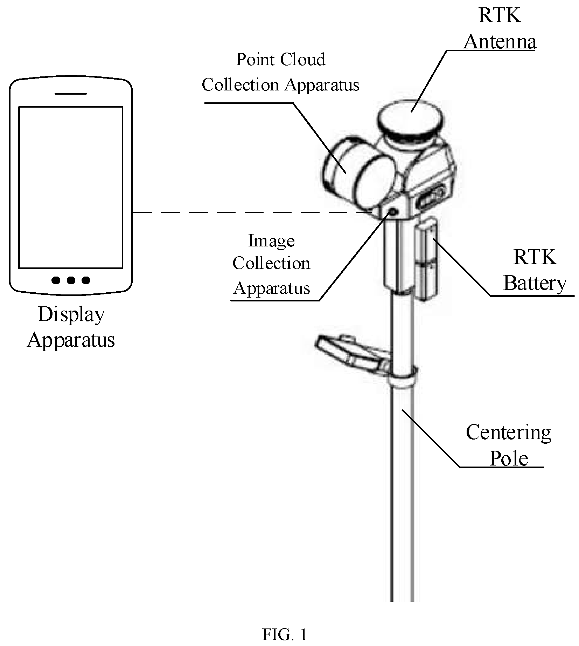

FIG. 1 is a schematic structural diagram of the positioning system provided in an embodiment of the present disclosure. As shown in FIG. 1, the positioning system includes the positioning device and a display apparatus. The display apparatus may be an apparatus integrated on the positioning device, or may be an independent display device communicatively connected to the positioning device, such as a terminal or a handheld tablet, which is not limited in the present disclosure. In FIG. 1, the display apparatus is exemplified by an independent display device, namely a terminal, and the terminal is communicatively connected to the positioning device. Referring to FIG. 1, the image collection apparatus and the point cloud collection apparatus are integrated in the positioning device, and the image collection apparatus is arranged below the point cloud collection apparatus. The image collection apparatus can collect a real-time video or image of a surrounding environment of the positioning device by means of video shooting or picture shooting, and the point cloud collection apparatus can collect point cloud data of the surrounding environment of the positioning device in real time by means of laser scanning. For example, the image collection apparatus may be a high-definition camera, and the point cloud collection apparatus may be a lidar sensor.

In addition, a GNSS board, an inertial measurement unit, a processor, and a memory are further integrated in the positioning device. An RTK antenna is arranged at the uppermost part of the positioning device. The GNSS board obtains satellite data and a differential data stream through the RTK antenna in an open environment, and obtains absolute position information of the RTK antenna center in real time. The GNSS board and the inertial measurement unit are integrated on a printed circuit board assembly (PCBA) (not shown in the figures) inside the positioning device, and the inertial measurement unit can obtain attitude information of the positioning device.

As an optional implementation, the positioning device is an RTK device with a centering pole.

Optionally, with continued reference to FIG. 1, the positioning device further includes the centering pole. The centering pole is a vertically arranged straight pole. The RTK antenna, the point cloud collection apparatus, and the image collection apparatus are all arranged above an end of the centering pole, and a lower end of the centering pole contacts the ground during positioning. The positioning device is an RTK device with the centering pole. The centering pole may be a rover pole of the RTK device.

In this embodiment, the positioning device further includes the centering pole, and an end of the centering pole is connected to the RTK antenna, the point cloud collection apparatus, and the image collection apparatus, such that the positioning device is an RTK device with the centering pole. Compared with a handheld positioning measurement device, the RTK device with the centering pole saves manpower and further improves measurement accuracy.

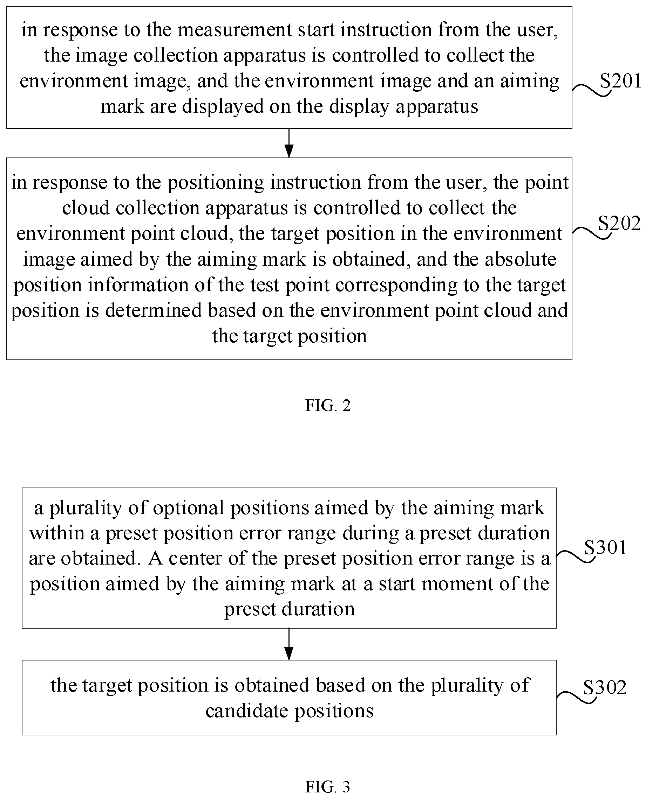

FIG. 2 is a schematic flowchart of the positioning method provided in an embodiment of the present disclosure. An executer of the positioning method is the positioning device. The positioning device includes the image collection apparatus and the point cloud collection apparatus, and the positioning method includes the following steps.

At Step S201, in response to a measurement start instruction from the user, the image collection apparatus is controlled to collect an environment image, and the environment image and an aiming mark are displayed on the display apparatus.

Optionally, the user can start the positioning device and the display apparatus. Referring to FIG. 1, after the startup, the display apparatus is communicatively connected to the positioning device. The display apparatus may be connected to the positioning device through a wireless network such as Wi-Fi or Bluetooth, or may be connected to the positioning device in a wired manner.

The user controls, through the measurement start instruction, the positioning device to enter a non-contact measurement state. For example, a measurement start switch or button is arranged on the positioning device, and the user can send the measurement start instruction to the positioning device by triggering the measurement start switch or button on the positioning device.

The positioning device receives and responds to the measurement start instruction triggered by the user, controls, according to the measurement start instruction, the image collection apparatus to collect the environment image in real time, and sends the environment image to the display apparatus in real time. For example, the positioning device controls the image collection apparatus to collect a video image or a picture of the surrounding environment of the positioning device in real time, and sends the video image or the picture to the display device communicatively connected to the positioning device in a form of video streaming or picture transmission. The display device receives and displays the video image or the picture, such that the user can view, on the display device in real time, the image of the surrounding environment of the positioning device collected by the image collection apparatus. The aiming mark of the image collection apparatus is present in the image displayed by the display apparatus. A position aimed by the aiming mark is a point directly ahead of a center point of the image collection apparatus, for example, a camera. For example, the aiming mark may be a cross mark, and the cross mark indicates that a marked image point is the point directly ahead of the center point of the camera.

At Step S202, in response to a positioning instruction from the user, the point cloud collection apparatus is controlled to collect an environment point cloud, a target position in the environment image aimed by the aiming mark is obtained, and absolute position information of a test point corresponding to the target position is determined based on the environment point cloud and the target position.

Optionally, the user controls, in response to the positioning instruction, the positioning device to enter a positioning state for the non-contact measurement. For example, a positioning start switch or button is further arranged on the positioning device, and the user can send the positioning instruction to the positioning device by triggering the positioning start switch or button on the positioning device.

The positioning device receives and responds to the positioning instruction triggered by the user, and controls, according to the positioning instruction, the point cloud collection apparatus to collect the environment point cloud in real time. The positioning device obtains, according to the positioning instruction, the target position in the environment image aimed by the aiming mark. The target position may be a position to be measured, with which the aiming mark in the environment image on the display apparatus is aligned by the user moving the positioning device, or may be a position to be measured manually selected by the user in the environment image on the display apparatus. The positioning device determines the absolute position information of the test point corresponding to the target position based on the environment point cloud collected by the point cloud collection apparatus, the target position selected by the user, and the absolute coordinates of the RTK antenna center.

In this embodiment, the positioning device responds to the measurement start instruction from the user, controls, according to the measurement start instruction, the image collection apparatus to collect the environment image in real time, and sends the environment image to the display apparatus in real time. The image of the surrounding environment of the positioning device collected by the image collection apparatus is displayed on the display device in real time, and the aiming mark of the image collection apparatus is present in the image displayed by the display apparatus. The positioning device further responds to the positioning instruction from the user, controls, according to the positioning instruction, the point cloud collection apparatus to collect the environment point cloud in real time, and obtains, according to the positioning instruction, the target position in the environment image aimed by the aiming mark. The absolute position information of the test point corresponding to the target position is determined based on the environment point cloud collected by the point cloud collection apparatus, the target position, and the absolute coordinates of the RTK antenna center. As such, non-contact high-precision positioning measurement in an occluded environment is implemented, and positioning efficiency and positioning accuracy are improved.

As an optional implementation, the measurement start instruction is input by the user through the display apparatus.

Optionally, with continued reference to FIG. 1, the user may further input the measurement start instruction on an operation interface of the display apparatus. The display apparatus receives the measurement start instruction and transmits the measurement start instruction to the positioning device communicatively connected to the display apparatus. The positioning device is thus controlled to enter the non-contact measurement state. For example, the display apparatus, such as the terminal, is provided with a measurement start mark or a text interface of "START MEASUREMENT". The user clicks the measurement start mark or the text interface to input the measurement start instruction to the terminal. The terminal identifies the click operation of the user, receives the measurement start instruction, and transmits the measurement start instruction to the positioning device communicatively connected to the terminal.

In this embodiment, the user inputs the measurement start instruction to the display apparatus, and the display apparatus transmits the measurement start instruction input by the user to the positioning device communicatively connected to the display apparatus, such that the positioning device enters the non-contact measurement state under the control of the measurement start instruction. As such, the positioning device is flexibly controlled to enter the non-contact measurement state.

As an optional implementation, the positioning instruction is input by the user through the display apparatus.

Optionally, with continued reference to FIG. 1, the user may further input the positioning instruction on the operation interface of the display apparatus. The display apparatus receives the positioning instruction and transmits the positioning instruction to the positioning device communicatively connected to the display apparatus, to control the positioning device to enter the positioning state of the non-contact measurement. For example, the display apparatus, such as the terminal, is further provided with a positioning start mark or a text interface of "START POSITIONING". The user touches the positioning start mark or the text interface to input positioning instruction to the terminal. The terminal identifies the click operation of the user, receives the positioning instruction, and transmits the positioning instruction to the positioning device communicatively connected to the terminal.

In this embodiment, the user inputs the positioning instruction on the display apparatus, and the display apparatus transmits the positioning instruction input by the user to the positioning device communicatively connected to the display apparatus, such that the positioning device enters the positioning state of the non-contact measurement under the control of the positioning instruction. As such, the positioning device is flexibly controlled to enter the positioning state of the non-contact measurement.

As an optional implementation, after the absolute position information of the test point corresponding to the target position is determined based on the environment point cloud and the target position, the positioning method further includes:
outputting the absolute position information.

Optionally, after obtaining the absolute position information of the test point, the positioning device can output the absolute position of the test point in real time to prompt the user, such that the user can obtain the absolute position information of the current test point in real time.

For example, the positioning device may be communicatively connected to a voice broadcast apparatus, and send the absolute position information of the test point to a voice broadcast device. The voice broadcast device can broadcast the absolute position information of the test point to the user in real time in the form of a voice broadcast. The manner of outputting the absolute position information of the test point is not limited in the present disclosure.

In this embodiment, the positioning device outputs the absolute position information of the test point, such that the user can obtain the absolute position information of the current test point in real time.

As an optional implementation, the step of outputting the absolute position information includes:
displaying the absolute position information of the test point on the display apparatus.

Optionally, continuing to refer to FIG. 1, the positioning device is communicatively connected to the display apparatus. The positioning device can further send the absolute position information of the test point to the display apparatus, and the absolute position information of the test point is displayed on the display apparatus in real time. The absolute position information of the test point can further be saved and recorded according to a selection of the user. For example, the user touches a save mark or text on the operation interface of the display apparatus to save the absolute position information of the test point into a point library, so that the user subsequently exports a list in the point library to obtain the absolute position information of each test point.

In this embodiment, the display apparatus displays the received absolute position information of the test point, so that the absolute position information of the test point in an occluded environment is intuitively presented to the user in real time.

A process of obtaining the target position in the environment image aimed by the aiming mark is described below in detail.

FIG. 3 is a schematic flowchart of obtaining the target position in the positioning method provided in an embodiment of the present disclosure. As shown in FIG. 3, the step of obtaining the target position in the environment image aimed by the aiming mark in Step S202 includes the following steps.

At Step S301, a plurality of candidate positions aimed by the aiming mark within a preset position error range during a preset duration are obtained. A center of the preset position error range is a position aimed by the aiming mark at a start moment of the preset duration.

Optionally, the user can preconfigure the preset duration and the preset position error range on the operation interface of the display apparatus. The display apparatus generates preset information including the preset duration and the preset position error range, and sends the preset information to the positioning device communicatively connected to the display apparatus. The positioning device receives and stores the preset information. In this step, the positioning device can obtain the plurality of candidate positions according to the preset duration and the preset position error range in the preset information. At the start moment of the preset duration, the center of the preset position error range is the position aimed by the aiming mark.

For example, the user configures, on the display apparatus, the preset information including measuring, within 3 seconds, positions within a 2-centimeter range of the environment image aimed by the aiming mark. The positioning device receives and responds to the preset information, and measures, within 3 seconds, the plurality of candidate positions within the 2-centimeter range of an environment aimed by the aiming mark.

At Step S302, the target position is obtained based on the plurality of candidate positions.

Optionally, the positioning device processes the plurality of candidate positions within the preset position error range to obtain the target position. The target position can indicate a center position of the preset position error range.

In this embodiment, the positioning device receives the preset duration and the preset position error range configured by the user on the operation interface of the display apparatus, measures, within the preset duration, the plurality of candidate positions in the environment image aimed by the aiming mark within the preset position error range, and processes the plurality of candidate positions within the preset position error range to obtain the target position. The user presets the position error range on the display apparatus to control the positioning device to obtain the target position, so that position selection of the non-contact measurement is implemented.

As an optional implementation, the step of obtaining the target position based on the plurality of candidate positions in Step S302 includes:
determining an average value of the plurality of candidate positions, and taking the average value as the target position.

Optionally, the positioning device performs averaging processing on the plurality of candidate positions within the preset position error range, and takes the average value of the plurality of candidate positions as the target position in the environment image aimed by the aiming mark within the preset position error range during the preset duration.

In this embodiment, the averaging processing is performed on the plurality of candidate positions within the preset position error range to obtain the target position in the environment image aimed by the aiming mark within the preset position error range during the preset duration, so that positioning accuracy is improved.

As an optional implementation, the aiming mark is displayed at the center of a screen of the display apparatus, and the position aimed by the aiming mark is the center of an image collected by the image collection apparatus.

Optionally, the image collection apparatus in the positioning device collects a moving environment image, and transmits and displays the moving environment image on the display apparatus in real time. When the image collection apparatus in the positioning device transmits the collected environment image to the display apparatus, the aiming mark is displayed at the center of the screen of the display apparatus, and the position aimed by the aiming mark is the center of the image collected by a center point of the image collection apparatus, for example, a camera. By moving the positioning device, the user can align the aiming mark in the image with a position to be measured.

In this embodiment, the display apparatus displays, in real time, the environment image collected by the image collection apparatus in the positioning device, and displays the aiming mark at the center of the screen. By moving the positioning device, the position aimed by the aiming mark, namely the center of the image collected by the image collection apparatus, is aligned with the position to be measured. As such, the user can conveniently select a measurement position on the display apparatus in a non-contact manner, and positioning efficiency is improved.

In a case where the aiming mark is displayed at the center of the screen of the display apparatus and the position aimed by the aiming mark is the center of the image collected by the image collection apparatus, a process of determining the absolute position information of the test point corresponding to the target position based on the environment point cloud and the target position is described in detail.

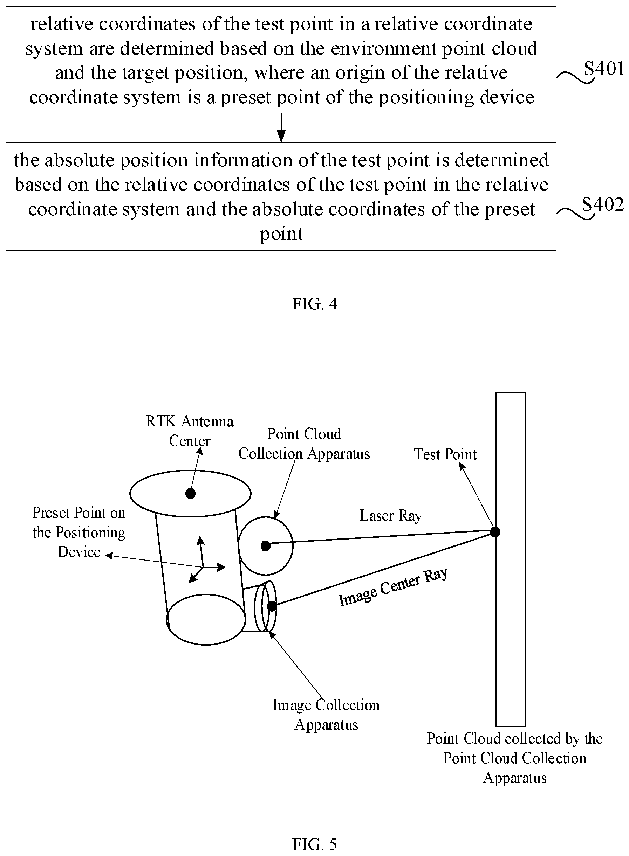

FIG. 4 is a schematic flowchart of determining the absolute position information of the test point in the positioning method provided in an embodiment of the present disclosure. As shown in FIG. 4, the step of determining the absolute position information of the test point corresponding to the target position based on the environment point cloud and the target position in Step S202 includes the following steps.

At Step S401, relative coordinates of the test point in a relative coordinate system are determined based on the environment point cloud and the target position. An origin of the relative coordinate system is a preset point of the positioning device.

Optionally, FIG. 5 is a schematic diagram of determining the test point by the point cloud collection apparatus and the image collection apparatus in the positioning device. As shown in FIG. 5, the RTK antenna, the point cloud collection apparatus, and the image collection apparatus are all rigidly connected and arranged on the positioning device. That is, positional relationships of the RTK antenna center, the center of the point cloud collection apparatus, and the center of the image collection apparatus relative to the preset point of the positioning device are fixed. The relative coordinate system may be established by taking the preset point of the positioning device, for example, a device center point, as a coordinate origin. When the aiming mark is displayed at the center of the screen of the display apparatus, and the position aimed by the aiming mark is the center of the image collected by the image collection apparatus, the aiming mark overlaps with an image center ray of the image collection apparatus. Therefore, the position aimed by the aiming mark is the image center of the image collection apparatus. The positioning device obtains the relative coordinates of the test point in the relative coordinate system based on the target position aimed by the aiming mark, an angle and a positional relationship of the image center ray relative to the preset point, and the environment point cloud.

Optionally, when the positioning device is located at an open position, the GNSS board in the positioning device obtains the satellite data and the differential data stream through the RTK antenna at the open position, performs RTK differential calculation based on the satellite data and the differential data stream, and determines the absolute position information of the RTK antenna center when the positioning device is located at a reference open position.

The absolute position information of the preset point of the positioning device is obtained according to a positional relationship between the RTK antenna center and the preset point of the positioning device. The point cloud collection apparatus and the inertial measurement unit construct a point cloud map of the surrounding environment in real time through simultaneous localization and mapping (SLAM) technology, and calculate a conversion relationship between the relative coordinate system and an absolute coordinate system. Then, relative coordinates of the center of the point cloud collection apparatus in the relative coordinate system are obtained according to a fixed positional relationship between the center of the point cloud collection apparatus and the preset point of the positioning device.

With continued reference to FIG. 5, an intersection point of a laser ray emitted when the point cloud collection apparatus collects a point cloud and the image center ray of the image collection apparatus is the test point corresponding to the target position selected by the user. The point cloud collection apparatus obtains the relative coordinates of the test point in the relative coordinate system through point cloud registration.

At Step S402, the absolute position information of the test point is determined based on the relative coordinates of the test point in the relative coordinate system and the absolute coordinates of the preset point.

Optionally, absolute coordinates of the test point are obtained through coordinate conversion based on the relative coordinates of the test point in the relative coordinate system, the absolute coordinates of the preset point, and the conversion relationship between the relative coordinate system and the absolute coordinate system, and are taken as the absolute position information of the test point.

In this embodiment, when the position aimed by the aiming mark is the image center of the image collection apparatus, the positioning device establishes the relative coordinate system by taking the preset point of the positioning device as the coordinate origin based on the environment point cloud collected by the point cloud collection device and the target position selected by the user by moving the positioning device. The test point corresponding to the target position is obtained according to the intersection point of the laser ray from the center of the point cloud collection device and the image center ray of the image collection apparatus, and the relative coordinates of the test point are obtained through the point cloud collection device. The absolute coordinates of the preset point of the positioning device are obtained through RTK positioning calculation, and the absolute position information of the test point is obtained through coordinate conversion. As such, accurate positioning of the test point by the positioning device is implemented.

As an optional implementation, a display position of the aiming mark in the display apparatus is indicated by the user.

Optionally, when the image collection apparatus collects the environment image by taking an image, the positioning device sends an environment picture to the display apparatus. The environment picture and the aiming mark are displayed on the display apparatus. The user can move the aiming mark on the display apparatus to select the target position on the environment picture, and a position in the environment picture aimed by the aiming mark is the target position.

In this embodiment, the user performs a point selection operation by moving the aiming mark, and manually selects, on the environment picture, the target position to be measured, so as to implement accurate real-time positioning of the positioning device without contacting the target position.

In a case where the display position of the aiming mark in the display apparatus is indicated by the user, a process of determining the absolute position information of the test point corresponding to the target position based on the environment point cloud and the target position is described below in detail.

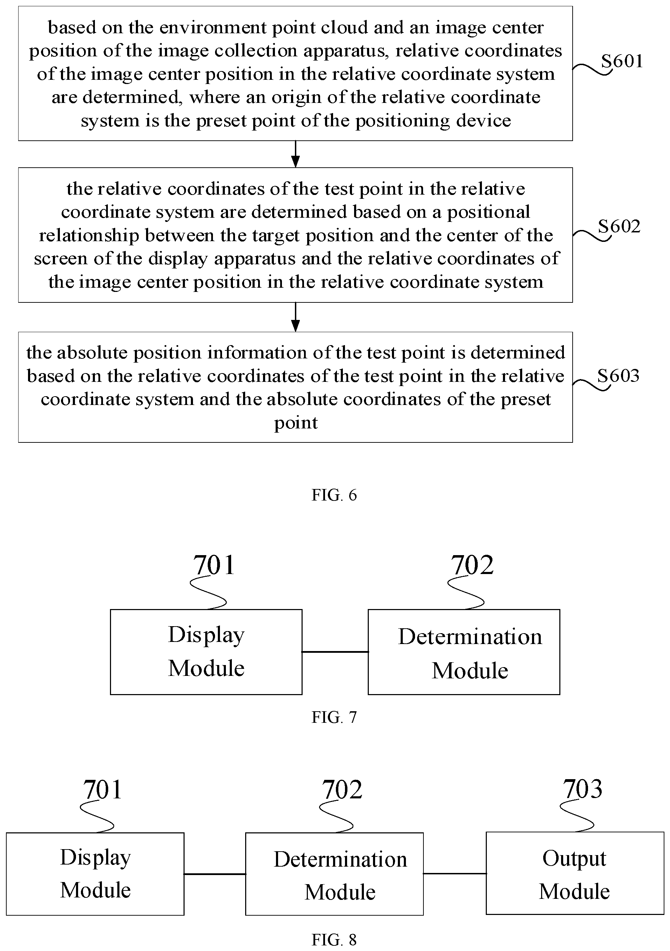

FIG. 6 is another schematic flowchart of determining the absolute position information of the test point in the positioning method provided in an embodiment of the present disclosure. As shown in FIG. 6, the step of determining the absolute position information of the test point corresponding to the target position based on the environment point cloud and the target position in Step S202 includes the following steps.

At Step S601, based on the environment point cloud and an image center position of the image collection apparatus, relative coordinates of the image center position in the relative coordinate system are determined. An origin of the relative coordinate system is the preset point of the positioning device.

Optionally, when a measurement environment network does not support real-time video stream transmission, the positioning device may further send the environment image collected by the image collection apparatus to the display apparatus in the form of picture transmission for display. In this case, the user can move the aiming mark on the display apparatus to select a measurement point, such that the position aimed by the aiming mark is the target position. The positioning device performs RTK positioning calculation and establishes the relative coordinate system, and further obtains the relative coordinates of the image center position in the relative coordinate system through point cloud matching based on a pixel offset of a ray emitted from the image center position of the image collection apparatus relative to the preset point of the positioning device and the environment point cloud.

At Step S602, the relative coordinates of the test point in the relative coordinate system are determined based on a positional relationship between the target position and the center of the screen of the display apparatus and the relative coordinates of the image center position in the relative coordinate system.

Optionally, the positioning device obtains the relative coordinates of the test point corresponding to the target position in the relative coordinate system based on a positional relationship between the target position selected by the user and the center of the screen of the display apparatus and in combination with the relative coordinates of the image center position in the relative coordinate system.

At Step S603, the absolute position information of the test point is determined based on the relative coordinates of the test point in the relative coordinate system and the absolute coordinates of the preset point.

Optionally, the positioning device obtains the absolute coordinates of the test point through coordinate conversion based on the relative coordinates of the test point in the relative coordinate system, the absolute coordinates of the preset point, and the conversion relationship between the relative coordinate system and the absolute coordinate system, and takes the absolute coordinates of the test point as the absolute position information of the test point.

In this embodiment, when the display position of the aiming mark in the display apparatus is indicated by the user, the positioning device establishes the relative coordinate system by taking the preset point of the positioning device as the coordinate origin based on the environment point cloud collected by the point cloud collection device and the target position selected by the user by moving the aiming mark on the display apparatus. The relative coordinates of the image center position in the relative coordinate system are obtained through point cloud matching based on the environment point cloud and the image center position of the image collection apparatus. The relative coordinates of the test point corresponding to the target position in the relative coordinate system are further obtained based on the positional relationship between the target position selected by the user and the center of the screen of the display apparatus and in combination with the relative coordinates of the image center position in the relative coordinate system. The absolute coordinates of the preset point of the positioning device are obtained through RTK positioning calculation, and the absolute position information of the test point is obtained through coordinate conversion. As such, accurate positioning of the test point by the positioning device under non-contact measurement is implemented.

Based on the same disclosed concept, a positioning apparatus corresponding to the positioning method is further provided in an embodiment of the present disclosure. A principle of the apparatus in the embodiment of the present disclosure for solving the problem is similar to that of the positioning method in the embodiment of the present disclosure. Therefore, for implementation of the apparatus, reference may be made to the implementation of the method, and repetitions are not described again.

FIG. 7 is a module structure diagram of the positioning apparatus provided in an embodiment of the present disclosure. As shown in FIG. 7, the positioning apparatus includes:
a display module 701, configured to, in response to the measurement start instruction from the user, control the image collection apparatus to collect the environment image, and display the environment image and the aiming mark on the display apparatus; and
a determination module 702, configured to, in response to the positioning instruction from the user, control the point cloud collection apparatus to collect the environment point cloud, obtain the target position in the environment image aimed by the aiming mark, and determine, based on the environment point cloud and the target position, the absolute position information of the test point corresponding to the target position.

As an optional implementation, the determination module 702 is specifically configured to:
obtain a plurality of candidate positions aimed by the aiming mark within the preset position error range during the preset duration, in which a center of the preset position error range is a position aimed by the aiming mark at a start moment of the preset duration; and
obtain the target position based on the plurality of candidate positions.

As an optional implementation, the determination module 702 is specifically configured to:
determine the average value of the plurality of candidate positions, and take the average value as the target position.

As an optional implementation, the aiming mark is displayed at the center of the screen of the display apparatus, and the position aimed by the aiming mark is the center of the image collected by the image collection apparatus.

As an optional implementation, the determination module 702 is specifically configured to:
determine, based on the environment point cloud and the target position, the relative coordinates of the test point in the relative coordinate system, in which the origin of the relative coordinate system is the preset point of the positioning device; and
determine the absolute position information of the test point based on the relative coordinates of the test point in the relative coordinate system and the absolute coordinates of the preset point.

As an optional implementation, the display position of the aiming mark in the display apparatus is indicated by the user.

As an optional implementation, the determination module 702 is specifically configured to:
determine, based on the environment point cloud and an image center position of the image collection device, the relative coordinates of the image center position in the relative coordinate system, in which the origin of the relative coordinate system is the preset point of the positioning device;
determine the relative coordinates of the test point in the relative coordinate system based on a positional relationship between the target position and the center of the screen of the display apparatus and the relative coordinates of the image center position in the relative coordinate system; and
determine the absolute position information of the test point based on the relative coordinates of the test point in the relative coordinate system and the absolute coordinates of the preset point.

As an optional implementation, the positioning device is a real-time differential positioning device with the centering pole.

As an optional implementation, the measurement start instruction is input by the user through the display apparatus.

As an optional implementation, the positioning instruction is input by the user through the display apparatus.

FIG. 8 is another module structure diagram of the positioning apparatus provided in an embodiment of the present disclosure. As shown in FIG. 8, the positioning apparatus further includes an output module 703 configured to output the absolute position information.

As an optional implementation, the output module 703 is specifically configured to:
display the absolute position information of the test point on the display apparatus.

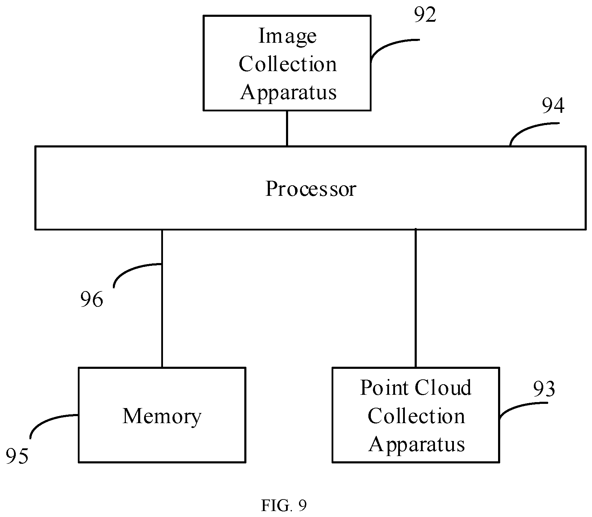

A positioning device is further provided in an embodiment of the present disclosure. As shown in FIG. 9, which is a schematic structural diagram of the positioning device provided in an embodiment of the present disclosure, the positioning device includes: the image collection apparatus 92, the point cloud collection apparatus 93, the processor 94, the memory 95, and a bus 96. The memory 95 stores machine-readable instructions executable by the processor 94 (for example, execution instructions corresponding to the display module 701, the determination module 702, and the output module 703 in the positioning apparatus in FIG. 8). When the positioning device operates, the processor 94 and the memory 95 communicate with each other through the bus 96, and when the machine-readable instructions are executed by the processor 94, the steps of the positioning method in the above embodiments are performed.

A positioning system is further provided in an embodiment of the present disclosure, including the positioning device in the above embodiments and the display apparatus communicatively connected to the positioning device.

Those skilled in the art may clearly understand that, for convenience and conciseness of description, for specific working processes of the system and the apparatus described above, reference may be made to corresponding processes in the method embodiments, which are not described again in the present disclosure. In the several embodiments provided in the present disclosure, it should be understood that the disclosed system, apparatus, and method may be implemented in other manners. The apparatus embodiments described above are merely schematic. For example, the division of the modules is only a logical function division, and there may be other division manners in actual implementation. For another example, a plurality of modules or components may be combined or integrated into another system, or some features may be ignored or not performed. In addition, the displayed or discussed mutual coupling, direct coupling, or communication connection may be indirect coupling or communication connection through some communication interfaces, apparatuses, or modules, and may be in electrical, mechanical, or other forms.

In addition, the functional units in the embodiments of the present disclosure may be integrated into one processing unit, or each of the units may exist alone physically, or two or more units may be integrated into one unit. If the functions are implemented in the form of software functional units and sold or used as an independent product, the functions may be stored in a computer-readable storage medium. Based on such understanding, the technical solutions of the present disclosure, essentially, or the part contributing to the prior art, or a part of the technical solutions may be embodied in the form of a software product. The computer software product is stored in a storage medium, and includes several instructions to cause a computer device (which may be a personal computer, a server, or a network device) to perform all or some of the steps of the methods described in the embodiments of the present disclosure. The foregoing storage medium includes various media that can store program code, such as a USB flash drive, a mobile hard disk, a read-only memory (ROM), a random access memory (RAM), a magnetic disk, or an optical disk.

The above descriptions are only specific implementations of the present disclosure, but the protection scope of the present disclosure is not limited thereto. Any variation or replacement readily conceived by those skilled in the art within the technical scope disclosed in the present disclosure shall fall within the protection scope of the present disclosure.

### INDUSTRIAL APPLICABILITY

With the above solutions, non-contact high-precision positioning measurement in an occluded environment can be implemented, and positioning efficiency and positioning accuracy are improved.

## Claims

1. A positioning method, **characterized by**, applied to a positioning device, the positioning device comprising an image collection apparatus and a point cloud collection apparatus, and the positioning method comprising:
in response to a measurement start instruction from a user, controlling the image collection apparatus to collect an environment image, and displaying the environment image and an aiming mark on a display apparatus; and
in response to a positioning instruction from the user, controlling the point cloud collection apparatus to collect an environment point cloud, obtaining a target position in the environment image aimed by the aiming mark, and determining, based on the environment point cloud and the target position, absolute position information of a test point corresponding to the target position.

2. The positioning method according to claim 1, **characterized in that** obtaining the target position in the environment image aimed by the aiming mark comprises:
obtaining a plurality of candidate positions aimed by the aiming mark within a preset position error range during a preset duration, wherein a center of the preset position error range is a position aimed by the aiming mark at a start moment of the preset duration; and
obtaining the target position based on the plurality of candidate positions.

3. The positioning method according to claim 2, **characterized in that** obtaining the target position based on the plurality of candidate positions comprises:
determining an average value of the plurality of candidate positions, and taking the average value as the target position.

4. The positioning method according to any one of claims 1 to 3, **characterized by**, the aiming mark is displayed at a center of a screen of the display apparatus, and the position aimed by the aiming mark is a center of an image collected by the image collection apparatus.

5. The positioning method according to any one of claims 1 to 4, **characterized in that** determining, based on the environment point cloud and the target position, the absolute position information of the test point corresponding to the target position comprises:
determining, based on the environment point cloud and the target position, relative coordinates of the test point in a relative coordinate system, wherein an origin of the relative coordinate system is a preset point of the positioning device; and
determining the absolute position information of the test point based on the relative coordinates of the test point in the relative coordinate system and absolute coordinates of the preset point.

6. The positioning method according to any one of claims 1 to 5, **characterized by**, a display position of the aiming mark in the display apparatus is indicated by the user.

7. The positioning method according to any one of claims 1 to 6, **characterized in that** determining, based on the environment point cloud and the target position, the absolute position information of the test point corresponding to the target position comprises:
determining, based on the environment point cloud and an image center position of the image collection apparatus, relative coordinates of the image center position in a relative coordinate system, wherein an origin of the relative coordinate system is a preset point of the positioning device;
determining the relative coordinates of the test point in the relative coordinate system based on a positional relationship between the target position and a center of a screen of the display apparatus and the relative coordinates of the image center position in the relative coordinate system; and
determining the absolute position information of the test point based on the relative coordinates of the test point in the relative coordinate system and absolute coordinates of the preset point.

8. The positioning method according to any one of claims 1 to 7, **characterized by**, the positioning device is a real-time differential positioning device with a centering pole.

9. The positioning method according to any one of claims 1 to 8, **characterized by**, the measurement start instruction is input by the user through the display apparatus.

10. The positioning method according to any one of claims 1 to 9, **characterized by**, the positioning instruction is input by the user through the display apparatus.

11. The positioning method according to any one of claims 1 to 10, **characterized in that** after determining, based on the environment point cloud and the target position, the absolute position information of the test point corresponding to the target position, the positioning method further comprises:
outputting the absolute position information.

12. The positioning method according to claim 11, **characterized in that** outputting the absolute position information comprises:
displaying the absolute position information of the test point on the display apparatus.

13. A positioning apparatus, **characterized by**, comprising:
a display module, configured to, in response to a measurement start instruction from a user, control an image collection apparatus to collect an environment image, and display the environment image and an aiming mark on a display apparatus;
a determination module, configured to, in response to a positioning instruction from the user, control a point cloud collection apparatus to collect an environment point cloud, obtain a target position in the environment image aimed by the aiming mark, and determine, based on the environment point cloud and the target position, absolute position information of a test point corresponding to the target position.

14. A positioning device, **characterized by**, comprising an image collection apparatus, a point cloud collection apparatus, a processor, a memory, and a bus;
wherein the image collection apparatus and the point cloud collection apparatus are each communicatively connected to the processor, the memory stores machine-readable instructions executable by the processor, and when the positioning device operates, the processor executes the machine-readable instructions to perform the steps of the positioning method according to any one of claims 1 to 12.

15. A positioning system, **characterized by**, comprising the positioning device according to claim 14 and a display apparatus communicatively connected to the positioning device.
